# EUROPEAN PATENT APPLICATION

(11) **EP 3 337 017 A1**
(43) Date of publication of application: **20.06.2018**
(21) Application number: 17163662.4
(22) Date of filing: 29.03.2017
(51) Int. Cl.: H02K 19/00, H02K 1/16, H02K 1/12

(54) **STATOR CORE, STEPPER MOTOR AND LINEAR ACTUATOR**

(30) Priority: 14.12.2016 JP 2016242040; 02.03.2017 JP 2017039708
(71) Applicant: Misumi Corporation, Bunkyo-ku Tokyo 112-8583 (JP); Daiseki Co. Ltd., Akashi-shi, Hyogo 673-0898 (JP)
(72) Inventor: Atsushi, Ogawa, Tokyo, Tokyo 112-8583 (JP); Atsushi, Kitamura, Tokyo, Tokyo 112-8583 (JP); Masaru, Yoshii, Tokyo, Tokyo 112-8583 (JP); Noriyasu, Kataoka, Tokyo, Tokyo 112-8583 (JP); Takako, Yasui, Tokyo, Tokyo 112-8583 (JP); Hideo, Yamada, Akashi-shi, Hyogo 673-0898 (JP)
(74) Representative: Schön, Christoph

(57) **Abstract**

A stator core, a stepper motor and a linear actuator allowing size reduction while maintaining a rotor diameter are provided. A stepper motor 1 comprises a rotor 20 and a stator 30, wherein the stator 30 comprises an A-phase magnetic pole part 33, a B-phase magnetic pole part 34 and a dummy magnetic pole part 38, all of which are disposed to be spaced apart from and opposing the outer circumferential surface of the rotor 20. The dummy magnetic pole part has no winding core part, and the A-phase magnetic pole part 33 and the B-phase magnetic pole part 34, which the stator 30 comprises, are disposed so that the A-phase magnetic pole part 33 and the B-phase magnetic pole part 34 are included within a minimum rectangular area R surrounding the rotor 20 when the stator 30 is viewed from a width direction X, i.e., a direction perpendicular to an axial direction P of the rotor 20.

## Description

### FIELD OF THE INVENTION

The present invention relates to a stator core, a stepper motor and a linear actuator.

### BACKGROUND OF THE INVENTION

A conventional stepper motor is disclosed in Patent Document 1. This stepper motor comprises a stator core 801 shown in Fig. 25. The stator core 801 is formed by laminating a plurality of plate-like iron cores for the stator core.

The stator core 801 comprises an annular body part 810 formed with a generally square-shaped profile feature when viewed from front, and eight magnetic pole parts 820 provided on an inner circumferential surface of the body part 810. The eight magnetic pole parts 820 protrude from the inner circumferential surface to the center of the body part 810, and are provided in an equally spaced arrangement in the circumferential direction and spaced apart from and opposing the outer circumferential surface of the rotor.

Each of the magnetic pole parts 820 are positioned at a central portion of each side and four corners of the body part 810. A through hole 811 is provided at each of the four corners of the body part 810 for inserting through a bolt for securing the stator core 801. Also, a slit 812 with a uniform length is provided in each of the four corners of the body part 810, wherein each slit 812 extends through the respective through hole 811 in a direction (radial direction) away from the center of the body part 810 to thereby provide a uniform width of each part which functions as a back yoke on each side and at the four respective corners of the body part 810.

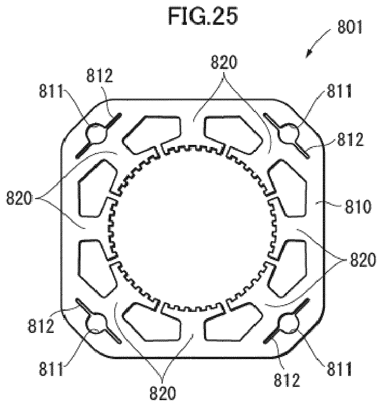

However, in the stepper motor described above, when reducing the size of the stator core 801 in its width direction (the left/right direction in Fig. 25) or height direction (the up/down direction in Fig. 25), the rotor also becomes smaller resulting in less rotor magnet volume to cause concern for a significant reduction in the torque performance. Further, if the rotor becomes smaller, rotor denticulations on the outer circumferential surface of the rotor, and therefore, stator denticulation at respective tips of magnetic pole parts 820 also become smaller, requiring higher-precision processing technology to cause a problem of manufacturing cost increase.

### SUMMARY OF THE INVENTION

Considering the above situation, the purpose of the present invention is to provide a stator core, a stepper motor and a linear actuator allowing size reduction while maintaining a rotor diameter.

In order to achieve the above object, a stator core of the present invention is a stator core with a rotor disposed therein, and it comprises: a body part comprising a short side and a long side when viewed from an axial direction of the rotor, wherein the body part comprises: a magnetic pole part comprising a winding core part with a winding around it, protruding from the short side toward the rotor, and a plurality of magnetic pole denticulations continuous with the winding core part and protruding toward the rotor; and a dummy magnetic pole part comprising a plurality of dummy denticulations protruding from the long side toward the rotor.

Since the stator core of this invention comprises the body part comprising the short side and the long side and the dummy magnetic pole part has no winding core part, the short side may be shortened. Thus, compared to the conventional generally square stator cores, the size of the square stator core of the present embodiment may be reduced while maintaining the rotor diameter. Also, the dummy magnetic pole part comprising the dummy denticulations may reduce a load generated in the rotor.

Further, in the stator core of the present invention, the dummy magnetic pole part may be formed so that spacing of the plurality of dummy denticulations is identical with spacing of the plurality of magnetic pole denticulations. According to this configuration, a torque generated in the rotor may be improved. On one hand, the spacing of the plurality of dummy denticulations may be different from the spacing of the plurality of magnetic pole denticulations. According to this configuration, a load generated in the rotor may be reduced.

Also, in the stator core of the present invention, it is preferable that the body part comprises a plurality of the magnetic pole parts spaced apart with predetermined magnetic pole spacing in a circumferential direction of the rotor when the body part is viewed from the axial direction of the rotor, and dummy spacing identical with the magnetic pole spacing is formed in the dummy magnetic pole part. According to this configuration, a load generated in the rotor may be reduced.

Moreover, in the stator core of the present invention, it is preferable that a winding recess is formed in the body part for a winding around the winding core part, and that an adjusting recess extending toward the dummy magnetic pole part is provided in the winding recess adjacent to the dummy magnetic pole part. According to experiments by the present inventors, it was found that providing the adjusting recess toward the dummy magnetic pole part reduced the load generated in the rotor. Also, the shape of this adjusting recess may be configured according to the shape of the stator core body part, the shape of the dummy denticulations, and the like.

The stepper motor of the present invention is a stepper motor comprising a stator core with a rotor disposed therein, wherein the stator core comprises a body part comprising a short side and a long side when viewed from an axial direction of the rotor, wherein the body part comprises a plurality of magnetic pole parts, each comprising a winding core part with a winding around it, protruding from the short side toward the rotor, and a plurality of magnetic pole denticulations continuous with the winding core part and protruding toward the rotor, and wherein the plurality of magnetic pole parts are disposed to be included within a minimum rectangular area surrounding the rotor when the stator core is viewed from one direction perpendicular to the axial direction of the rotor.

According to the present invention, the plurality of magnetic pole parts, which the stator core comprises, are disposed to be included within a minimum rectangular area surrounding the rotor when the stator core is viewed from one direction perpendicular to the axial direction of the rotor. Here, a magnetic pole part conceptually comprises a winding core part with a winding around it, and a plurality of magnetic pole denticulations protruding toward the outer circumferential surface of the rotor; and do not include magnetic pole parts which do not comprise a winding core. A rotor refers to an entire object rotated about the center of axis by the magnetic effect of the stator. A minimum rectangular area surrounding the rotor refers to a rectangular area, wherein the length of the rectangle's two opposing sides is identical with the diameter of the rotor and wherein the length of the rectangle's other two opposing sides perpendicular to the above two sides is identical with the axial length of the rotor.

Also, compared to the conventional, generally square stator cores, the stepper motor of the present invention comprises the body part comprising the short side and the long side, and may be reduced in size while maintaining the rotor diameter to allow size reduction of the stepper motor itself.

Additionally, the stepper motor of the present invention may be provided with a dummy magnetic pole part comprising a plurality of dummy denticulations protruding from the long side of the body part of the stator core toward the rotor. In this configuration, since the dummy magnetic pole part has no winding core part, the short side of the stator core may be shortened.

Further, in the stepper motor of the present invention, the dummy magnetic pole part may be formed so that spacing of the plurality of dummy denticulations is identical with spacing of the plurality of magnetic pole denticulations. According to this configuration, a torque generated in the rotor may be improved. On one hand, the spacing of the plurality of dummy denticulations may be different from the spacing of the plurality of magnetic pole denticulations. According to this configuration, a load generated in the rotor may be reduced.

Also, in the stepper motor of the present invention, it is preferable that a winding recess is formed in the body part of the stator core for a winding around the winding core part, and that an adjusting recess extending toward the dummy magnetic pole part is provided in the winding recess adjacent to the dummy magnetic pole part. According to this adjusting recess, a load generated in the rotor may be reduced.

Moreover, in the stepper motor of the present invention, it is preferable that the stator core is separated into two stator cores so that the two stator cores oppose with each other in the one direction with the rotor in between, the plurality of magnetic pole parts are provided on each of the opposing surfaces of the two stator cores, and the stepper motor further comprises one or two stator core connectors for connecting the two stator core. Such a configuration has a fixed positional relationship between the two stator cores, and therefore, may be assembled accurately. Comprising two stator core connectors may improve assembly precision, whereas comprising one stator core connector may allow both assembly precision and weight reduction.

Also, the stepper motor of the present invention comprises a case for housing the stator core and the rotor; and a connection cable for being lead out of the case through a lead-out part, wherein the lead-out part comprises an angle change structure for maintaining a lead-out angle of the connection cable with the lead-out angle arbitrarily changed relative to the case. This configuration allows the connection cable to be maintained at a preferable position depending on a circumstance surrounding a place to install the stepper motor. Further, when simply leading out the connection cable by itself, the connection cable position may need to be fixed using other devices, support members or the like, but such fixing procedure becomes unnecessary with the lead-out part comprising the angle change structure of the present invention.

The linear actuator of the present invention comprises: a stepper motor comprising a stator core with a rotor disposed therein; a nut member disposed coaxially with the center of axis of the rotor, the nut member for being rotated by the rotation of the rotor; and a screw shaft screwed together with the nut member for being moved forward or backward by the rotation of the nut member, wherein the stator core comprises a body part comprising a short side and a long side when viewed from an axial direction of the rotor; and a plurality of magnetic pole parts, each comprising a winding core part with a winding around it, protruding from the short side toward the rotor, and a plurality of magnetic pole denticulations continuous with the winding core part and protruding toward the rotor, and wherein the plurality of magnetic pole parts are disposed to be included within a minimum rectangular area surrounding the rotor when the stator core is viewed from one direction perpendicular to the axial direction of the rotor.

According to the linear actuator of the present invention, since the magnetic pole parts are disposed to be included within the minimum rectangular area surrounding the rotor when the stator core is viewed from one direction perpendicular to the axial direction of the rotor, compared to the conventional, generally square stator cores, the stator core of the present invention may be reduced in size while maintaining the rotor diameter to also allow size reduction of the linear actuator comprising the stator core.

Moreover, in the present invention, a linear actuator may be a linear actuator with a guide, further comprising: a slider; a guide positionally fixed relative to the stator for slidably supporting the slider so that the slider is allowed to move only in a forward/backward direction of the screw shaft; and a connected object connected with a front end of the screw shaft and also connected with the slider. Such a configuration may assist the movement of the screw shaft and the connected object so that they do not deviate from forward/backward direction when the screw shaft moves forward or backward.

Further, the linear actuator and the linear actuator with the guide of the present invention also comprises a case for housing the stator core and the rotor; and a connection cable for being lead out of the case through a lead-out part, wherein the lead-out part comprises an angle change structure for maintaining a lead-out angle of the connection cable with the lead-out angle arbitrarily changed relative to the case.

The stator core, the stepper motor and the linear actuator of the present invention may be reduced in size while maintaining the rotor diameter.

### BRIEF DESCRIPTION OF THE DRAWINGS

Fig. 1 is a perspective view of a stepper motor according to a first embodiment of the present invention;
Fig. 2 is a front view of the stepper motor of Fig. 1;
Fig. 3 is a perspective view of a rotor, which the stepper motor of Fig. 1 comprises;
Fig. 4 is a cross-sectional view taken along a line IV-IV of Fig. 1;
Fig. 5 is a cross-sectional view taken along a line V-V of Fig. 1;
Fig. 6 is an enlarged sectional view of a portion of Fig. 5;
Fig. 7 is a cross-sectional view taken along a line VII-VII of Fig. 1;
Fig. 8 is a cross-sectional view of a stepper motor according to a second embodiment of the present invention;
Fig. 9 is a cross-sectional view showing a configuration of a first variation of the stepper motor of Fig. 8;
Fig. 10 is a cross-sectional view showing a configuration of a second variation of the stepper motor of Fig. 8;
Fig. 11 is a cross-sectional view showing a configuration of a third variation of the stepper motor of Fig. 8;
Fig. 12 is a cross-sectional view showing a configuration of a fourth variation of the stepper motor of Fig. 8;
Fig. 13 is a perspective view of a linear actuator according to a third embodiment of the present invention;
Fig. 14 is a front view of the linear actuator of Fig. 13;
Fig. 15 is a perspective view of a rotor, which the linear actuator of Fig. 13 comprises;
Fig. 16 is a cross-sectional view taken along a line XVI-XVI of Fig. 13;
Fig. 17 is a perspective view showing a configuration of a first variation of the linear actuator of Fig. 13;
Fig. 18 is a top view of the linear actuator of Fig. 17;
Fig. 19 is a rear view of the linear actuator of Fig. 17;
Fig. 20 is a perspective view showing a configuration of a second variation of the linear actuator of Fig. 13;
Fig. 21 is a top view of the linear actuator of Fig. 20;
Fig. 22 is a rear view of the linear actuator of Fig. 20;
Fig. 23 is a perspective view showing a configuration of a variation of the linear actuator of Fig. 17;
Fig. 24 is a explanatory view showing movement of a connection cable of the linear actuator of Fig. 23; and
Fig. 25 is a front view of a stator core, which a conventional stepper motor comprises.

### DETAILED DESCRIPTION OF THE INVENTION

### (First Embodiment)

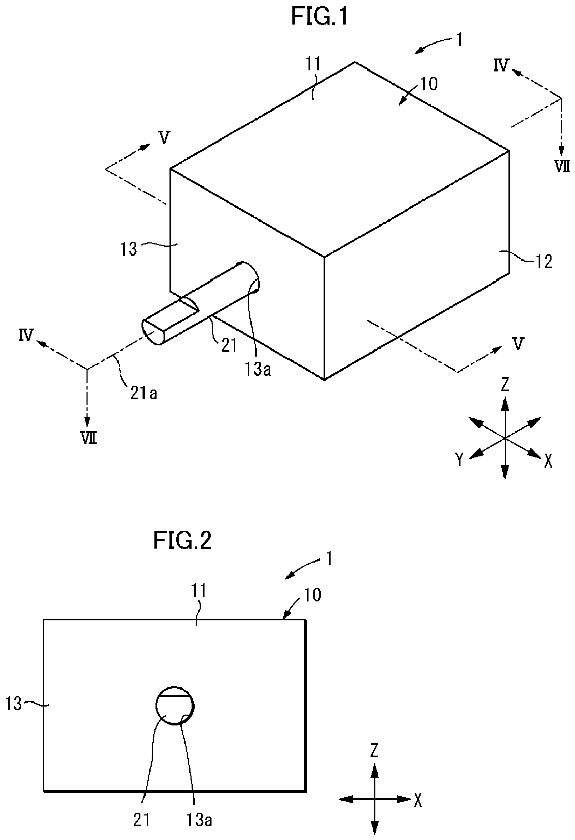

A two-phase hybrid type stepper motor according to a first embodiment of the present invention will now be described with reference to Fig. 1-Fig. 7.

As shown in each figure, the two-phase hybrid type stepper motor (hereafter, simply referred to as "stepper motor 1") comprises a case 10, a rotor 20 and a stator 30.

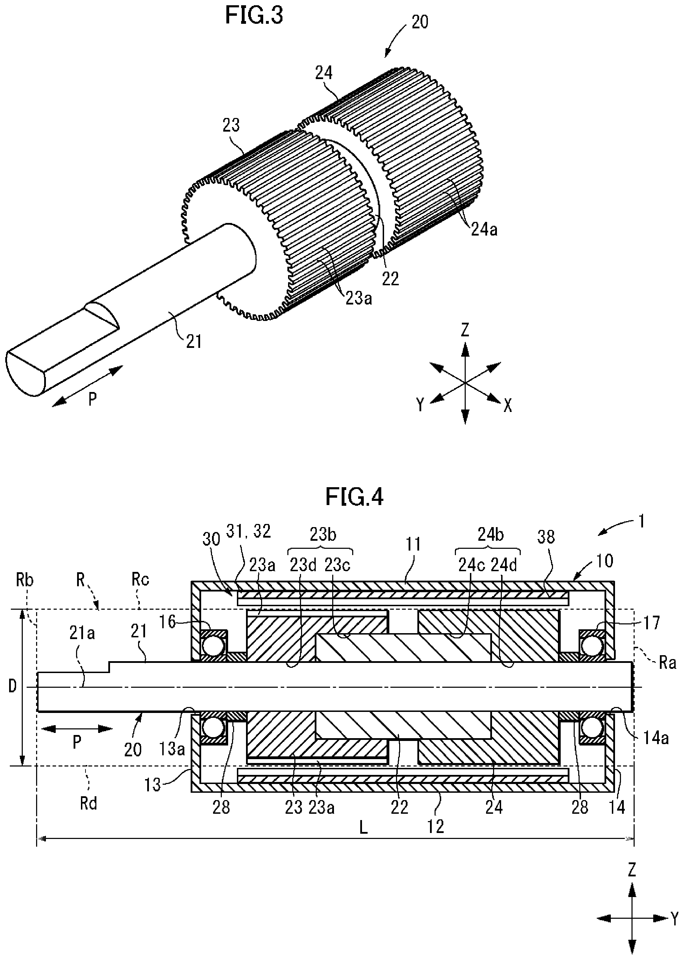

As shown in Fig. 1 and Fig. 2, the case 10 is formed in a cuboidal hollow box shape, wherein its dimension in the height direction Z is smaller than its dimension in the width direction X. As shown in Fig. 4, the case 10 comprises a case body part 11 made of metal such as stainless steel; and a front bearing 16 and a rear bearing 17, each consisting of a ball bearing.

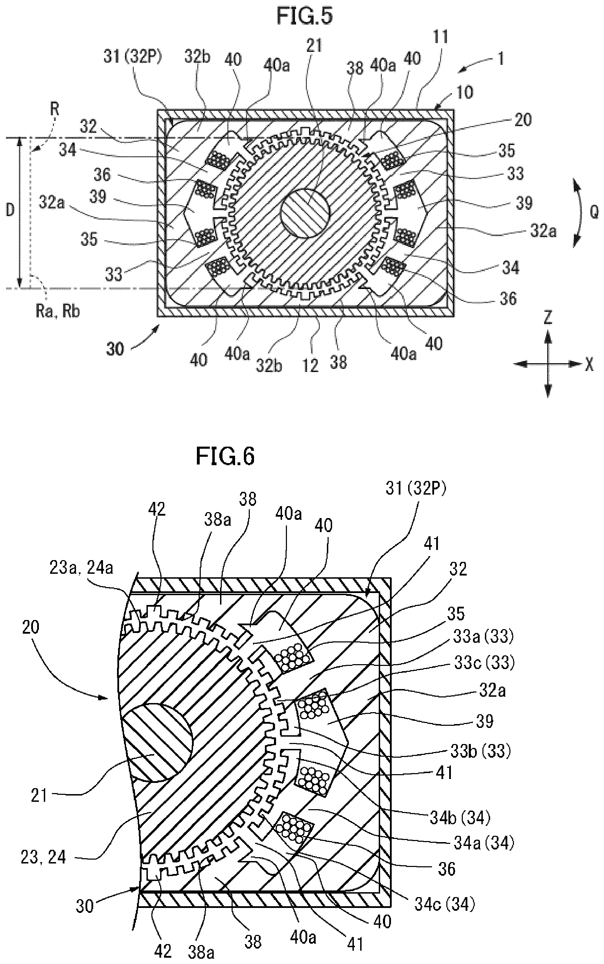

As shown in Fig. 4 and Fig. 5, the case body part 11 comprises a peripheral wall part 12 in a hollow cuboidal shape with a rectangular cross section, a rectangular plate-like front wall part 13 for closing up a front-side end of the peripheral wall part 12 and a rectangular plate-like rear wall part 14 for closing up a rear-side end of the peripheral wall part 12. The front wall part 13 is integral with the peripheral wall part 12 and the rear wall part 14 is removable with respect to the peripheral wall part 12.

There is a circular front shaft through hole 13a formed in the central section of the front wall part 13. The front bearing 16 is attached on an inner surface of the front wall part 13 so that the front bearing 16 is coaxial with the front shaft through hole 13a. Similarly, there is a circular rear shaft through hole 14a formed in the central section of the rear wall part 14. The rear bearing 17 is attached on an inner surface of the rear wall part 14 so that the rear bearing 17 is coaxial with the rear shaft through hole 14a.

As shown in Fig. 3, the rotor 20 comprises a shaft 21, a magnet 22, an N-pole rotor core 23, an S-pole rotor core 24 and two spacers 28, 28 (see Fig. 4). The rotor 20 collectively refers to all integrated components rotatably and axially supported, wherein the rotor 20 is rotated about the center of axis by a magnetic effect of the stator 30 discussed below.

The shaft 21 is a cylindrical member made of metal, such as stainless steel, and its front-side end is cut into a D-shape. The shaft 21 is inserted through the front bearing 16 and the rear bearing 17 of the case 10, and rotatably and axially supported.

The magnet 22 consist of a permanent magnet such as an alnico magnet or a rare-earth magnet, and is cylindrically shaped so that its inner diameter is the same as an outer diameter of the shaft 21. The magnet 22 is magnetized so that its front-side end is its N pole and its rear-side end is its S pole. As shown in Fig. 4, the magnet 22 has the shaft 21 inserted therethrough, and the magnet 22 is fixedly attached in a central portion of the shaft 21 in the direction of its center of axis 21a (i.e., the axial direction P of the rotor 20 or a longitudinal direction Y of the case 10) at a position slightly toward the rear side.

The N-pole rotor core 23 is in a generally cylindrical shape with thin electromagnetic steel plates (iron core) laminated in the axial direction P. As shown in Fig. 5, rotor denticulations 23a are formed around the outer circumferential surface of the N-pole rotor core 23, wherein the rotor denticulations 23a extend along the axial direction P and arranged over the enter circumference in the circumferential direction Q in a uniform pitch (7.2 degrees in the present embodiment).

A through hole 23b is provided in the N-pole rotor core 23 in the axial direction P, and this through hole 23b comprises a large-diameter portion 23c whose inner diameter is the same as the outer diameter of the magnet 22 and a small-diameter portion 23d whose inner diameter is the same as the outer diameter of the shaft 21. The front-side end, i.e., the N pole of the magnet 22, is fixedly inserted in the large-diameter portion 23c, and the shaft 21 protruding from the front-side end surface of the magnet 22 is fixedly inserted in the small-diameter portion 23d. Thus, the N-pole rotor core 23 is kept magnetized as the N pole.

Similar to the N-pole rotor core 23, the S-pole rotor core 24 is in a generally cylindrical shape with thin electromagnetic steel plates (iron core) laminated in the axial direction P. Rotor denticulations 24a are formed around the outer circumferential surface of the S-pole rotor core 24, wherein the rotor denticulations 24a extend along the axial direction P and arranged over the enter circumference in the circumferential direction Q in a uniform pitch (7.2 degrees in the present embodiment).

A through hole 24b is provided in the S-pole rotor core 24 in the axial direction P, and this through hole 24b comprises a large-diameter portion 24c whose inner diameter is the same as the outer diameter of the magnet 22 and a small-diameter portion 24d whose inner diameter is the same as the outer diameter of the shaft 21. The rear-side end, i.e., the N pole of the magnet 22, is fixedly inserted in the large-diameter portion 24c, and the shaft 21 protruding from the rear-side end surface of the magnet 22 is fixedly inserted in the small-diameter portion 24d. Thus, the S-pole rotor core is kept magnetized as the S pole.

The N-pole rotor core 23 and the S-pole rotor core 24 are fixed so that the rotor denticulations 23a and the rotor denticulations 24a are offset from each other by a half pitch in the circumferential direction Q (3.6 degrees in the present embodiment). A diameter of the N-pole rotor core 23 and the S-pole rotor core 24 is a diameter D of the rotor 20. The two spacers 28, 28 are cylindrically shaped, and disposed between the N-pole rotor core 23 and the front bearing 16, and between the S-pole rotor core 24 and the rear bearing 17, respectively, when the shaft 21 is inserted.

As shown in Fig. 5, the stator 30 comprises a stator core 31, A-phase windings 35 and B-phase windings 36. The stator core 31 is formed with a thin plate-like iron core for stator core 32P being laminated in the axial direction P, and is housed within the case 10.

As shown in Fig. 5 and Fig. 6, the stator core 31 integrally comprises a stator core body part 32; A-phase magnetic pole parts 33 and B-phase magnetic pole parts 34 provided as magnetic pole parts on short sides 32a of the stator core body part 32; and a pair of dummy magnetic pole parts 38 provided on long sides 32b of the stator core body part 32.

Also, winding recesses are formed in the stator core 31 for providing the A-phase windings 35 and the B-phase windings 31. These winding recesses are composed of first winding recesses 39 each disposed between the A-phase magnetic pole part 33 and the B-phase magnetic pole part 34; and second winding recesses 40 provided adjacent to the dummy magnetic pole parts 38. As shown in Fig. 5 and Fig. 6, each of the first winding recesses 39 has a polygonal line-like shape protruding toward exterior of the stator core body part 32. Each of the second winding recesses 40 comprises an adjusting recess 40a extending toward the respective dummy magnetic pole part 38.

As shown in Fig. 4, the stator core body part 32 is formed in a pillar-like shape, wherein an entire length of the stator core body part 32 is shorter than an inner space length of the case body part 11 in the longitudinal direction Y, and longer than the length from the front-side end surface of the N-pole rotor core 23 to the rear-side end surface of the S-pole rotor core 24 of the rotor 20. The length of the short side 32a (the height in the height direction Z) of the stator core body part 32 is, as shown in Fig. 5, in such a way that this length is the same as the dimension of the inner space of the case body part 11 in the height direction Z.

Each of the A-phase magnetic pole parts 33 is formed in such a way that it protrudes from the inner circumferential surface of the respective short side 32a of the stator core body part 32 toward the outer circumferential surface of the rotor 20 (i.e., the outer circumferential surfaces of the magnet 22, the N-pole rotor core 23 and the S-pole rotor core 24), and extends over a length equal to the length of the stator core body part 32 in the longitudinal direction Y. As shown in Fig. 6, each of the A-phase magnetic pole parts 33 comprises a winding core part 33a and a tip part 33b, wherein the tip part 33b is wider than the core part 33a in the circumferential direction Q of the rotor 20. Formed in the respective tip part 33b are a plurality of projecting line-like stator denticulations (magnetic pole denticulations) 33c, which extend in the axial direction P and are arranged in the circumferential direction Q in a uniform pitch (7.5 degrees in the present embodiment). The plurality of stator denticulations 33c are disposed so that they are spaced apart from and opposing the outer circumferential surface of the rotor 20.

Similar to the A-phase magnetic pole parts 33, each of the B-phase magnetic pole parts 34 is formed in such a way that it protrudes from the inner circumferential surface of the respective short side 32a of the stator core body part 32 toward the outer circumferential surface of the rotor 20, and extends over a length equal to the length of the stator core body part 32 in the longitudinal direction Y. As shown in Fig. 6, each of the B-phase magnetic pole parts 34 comprises a winding core part 34a and a tip part 34b, wherein the tip part 34b is wider than the core part 34a in the circumferential direction Q of the rotor 20. Formed in the respective tip part 34b are a plurality of projecting line-like stator denticulations (magnetic pole denticulations) 34c, which extend in the axial direction P and are arranged in the circumferential direction Q in a uniform pitch (7.5 degrees in the present embodiment). The plurality of stator denticulations 34c are disposed so that they are spaced apart from and opposing the outer circumferential surface of the rotor 20.

The respective A-phase magnetic pole part 33 and B-phase magnetic pole part 34 are disposed in such a way that they are spaced apart from each other by a 45-degree angle and by magnetic pole spacing 41 in the circumferential direction Q of the rotor 20 about the center of axis 21a of the shaft 21. Also, the magnetic pole spacing 41 is provided between the respective A-phase magnetic pole part 33 and dummy magnetic pole part 38; and between the respective B-phase magnetic pole part 34 and dummy magnetic pole part 38.

As shown in Fig. 5 and Fig. 6, the dummy magnetic pole parts 38 each comprises a plurality of dummy denticulations 38a, which are disposed so that they are spaced apart from and opposing the outer circumferential surface of the rotor 20. These dummy denticulations 38a are formed with the same pitch as that of the stator denticulations 33c, 34c. The dummy denticulations 38a are formed with the same pitch as that of the stator denticulations 33c, 34c in the present embodiment, but different pitches may be selected depending on the shape of the stator 30.

The present inventors found that a torque generated in the rotor 20 improves by employing the identical pitch for the dummy denticulations 38a in the dummy magnetic pole parts 38, and for the stator denticulations 33c, 34c, in other words, by employing the identical interval for the dummy denticulations 38a and for the stator denticulations 33c, 34c.

On the other hand, the present inventors also found that a load generated in the rotor 20 decreases to thereby improve its operation efficiency by employing different pitches for the dummy denticulations 38a in the dummy magnetic pole parts 38, and for the stator denticulations 33c, 34c, in other words, by employing different intervals for the dummy denticulations 38a and for the stator denticulations 33c, 34c.

Therefore, when aiming to improve the torque, the pitch of the dummy denticulations 38a may be identical with the pitch of the stator denticulations 33c, 34c; and when aiming to improve the operation efficiency, the pitch of the dummy denticulations 38a may be different from the pitch of the stator denticulations 33c, 34c.

Also, each of the dummy magnetic pole parts 38 is provided with dummy spacing 42 identical with the magnetic pole spacing 41 between the tip part 33b of the A-phase magnetic pole part 33 and the tip part 34b of the B-phase magnetic pole part 34. This dummy spacing 42 may be identical with the magnetic pole spacing 41, or may be different from the magnetic pole spacing 41.

Each of the dummy magnetic pole parts 38 is formed in such a way that the adjusting recesses 40a of the second winding recesses 40 are formed in the rear side of the dummy denticulations 38a adjacent to the stator denticulations 33c and the stator denticulations 34c, respectively; and that ends of the respective dummy magnetic pole parts 38 are formed with a width (a length in the radial direction of the rotor 20) similar to the width of the tip parts 33b of the A-phase magnetic pole part 33 and the tip parts 34b of the B-phase magnetic pole part 34.

In the stepper motor 1 of the present embodiment, as shown in Fig. 4 and Fig. 5, the A-phase magnetic pole parts 33 and the B-phase magnetic pole parts 34 are disposed such that the A-phase magnetic pole parts 33 and the B-phase magnetic pole parts 34 are included within a minimum rectangular area R surrounding the rotor 20 when the stator 30 is viewed from a width direction X (i.e., a direction perpendicular to the axial direction P of the rotor 20). The minimum rectangular area R surrounding the rotor 20 is a rectangle, wherein the length of the rectangle's two sides Ra, Rb, opposing with each other in the longitudinal direction Y, is identical with the diameter D of the rotor 20, and wherein the length of the rectangle's two sides Rc, Rd, perpendicular to the two sides Ra, Rb and opposing with each other in the height direction Z, is identical with an axial length L of the rotor 20.

Also, in the stepper motor 1 of the present embodiment, the A-phase magnetic pole parts 33 and the B-phase magnetic pole parts 34 are disposed so that when the stator denticulations 33c in the center of the A-phase magnetic pole parts 33 are situated opposing the rotor denticulations 23a of the N-pole rotor core 23, the stator denticulations 33c in the center of the B-phase magnetic pole parts 34 are offset from the rotor denticulations 23a of the N-pole rotor core 23 (offset by 1.8 degrees in the present embodiment) in the circumferential direction Q. Note that, for example, any number of denticulations or any pitch may be selected for the rotor denticulations 23a, the rotor denticulations 24a, the stator denticulations 33c or the stator denticulations 34c, and any number of, or any angle between the respective centerlines of the A-phase magnetic pole parts 33 and the B-phase magnetic pole parts 34 may be selected unless contrary to one or more objectives of the present invention.

The A-phase windings 35 are configured with one enameled copper wire wound by the concentrated winding around the winding core part 33a of one of the A-phase magnetic pole parts 33, and the winding core part 33a of the other A-phase magnetic pole parts 33 of the stator core 31.

The B-phase windings 36 are configured with another enameled copper wire, independent of the enameled copper wire of the A-phase winding 35, wound by the concentrated winding around the winding core part 34a of one of the B-phase magnetic pole parts 34, and the winding core part 34a of the other B-phase magnetic pole parts 34 of the stator core 31.

According to the present embodiment discussed above, the plurality of A-phase magnetic pole parts 33 and B-phase magnetic pole parts 34, which the stator 30 comprises, are disposed so that the A-phase magnetic pole parts 33 and B-phase magnetic pole parts 34 are included within the minimum rectangular area R surrounding the rotor 20 when the stator 30 is viewed from the width direction X. The dimension of this minimum rectangular area R in the height direction Z is the same as the diameter of the rotor 20.

Also, in the present embodiment, the long sides 32b of the stator core body part 32 are each provided with the dummy magnetic pole part 38 with no winding rather than being provided with magnetic pole parts as in the typical stepper motors. Thus, the short sides 32a of the stator core body part 32 may be shortened, allowing an overall size of the stepper motor 1 compact.

Additionally in the present embodiment, the stator core 31 is provided with the first winding recesses 39 and the second winding recesses 40. Each of the first winding recesses 39 has the polygonal line-like shape protruding toward the exterior of the stator core body part 32, forming a generally pentagonal shape. Each of the second winding recesses 40 comprises the adjusting recess 40a extending toward the respective dummy magnetic pole part 38, generally forming a R-shape or its reversed shape. As such, by forming the first winding recesses 39 and the second winding recesses 40, load generated in the rotor 20 may be reduced.

Note that the load to the rotor 20 varies depending on, for example, a ratio of the long side 32b to the short side 32a of the stator core body part 32; and shapes and sizes of through holes (not shown) in the stator core 31, wherein fixing bolts are inserted through the through holes when making the stator core 31 by laminating the iron core for stator core 32P. Thus, it is preferable to set the shapes of the first winding recesses 39 and the second winding recesses 40 according to the shape of the stator core 31.

### (Second Embodiment)

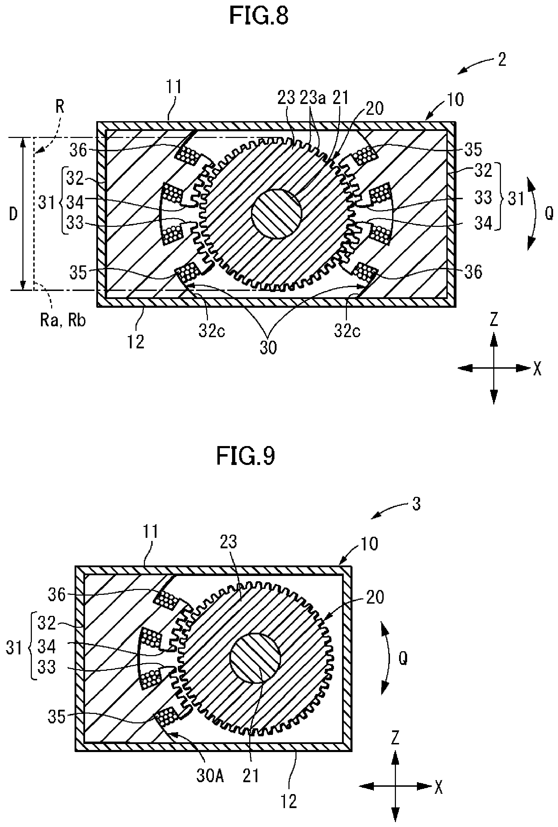

Next, a stepper motor 2 of a second embodiment of the present invention will be discussed below. In the second embodiment, as shown in Fig. 8, there are two stator cores 31 separated into the left and right sides. These two stator cores 31, 31 are each formed by laminating thin electromagnetic steel plates (iron core) in the axial direction P, and disposed so that the two stator cores 31, 31 oppose each other in the width direction X (i.e., the direction perpendicular to the axial direction P of a rotor 20) with the rotor 20 between the two stator cores 31, 31. Each of the two stator cores 31, 31 integrally comprises a stator core body part 32, an A-phase magnetic pole part 33 and a B-phase magnetic pole part.

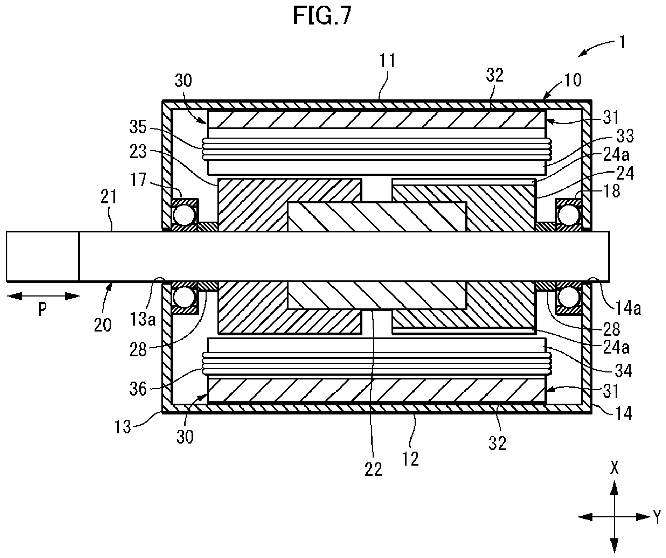

Similar to Fig. 4 and Fig. 7 of the first embodiment, each of the stator core body parts 32 is formed in a pillar-like shape, wherein an entire length of the stator core body part 32 is shorter than an inner space length of a case body part 11 in the longitudinal direction Y, and longer than a length from the front-side end surface of an N-pole rotor core 23 to the rear-side end surface of an S-pole rotor core 24 of the rotor 20. The dimension of the stator core body part 32 in the height direction Z is, as shown in Fig. 8, in such a way that this dimension is the same as that of the inner space of the case body part 11 in the height direction Z. Each of the stator core body parts 32 comprises an opposing surface 32c facing the other stator core body part 32. Each of the opposing surfaces 32c is formed in a concave surface along an arc having a center of axis 21 a of a shaft 21 as a center. Also, these opposing surfaces 32c may be planar.

Each of the A-phase magnetic pole parts 33 is formed in such a way that it protrudes from the respective opposing surface 32c toward the outer circumferential surface of the rotor 20, and extends over a length equal to the length of the respective stator core body part 32 in the longitudinal direction Y. As in the first embodiment, the A-phase magnetic pole parts 33 each comprises a winding core part and tip parts. Also, stator denticulations are formed in the tip parts.

Similar to the A-phase magnetic pole parts, each of the B-phase magnetic pole parts 34 is formed in such a way that it protrudes from the respective opposing surface 32c toward the outer circumferential surface of the rotor 20, and extends over a length equal to the length of the respective stator core body part 32 in the longitudinal direction Y. The B-phase magnetic pole parts 33 also each comprises a winding core part and tip parts. Also, stator denticulations are formed in the tip parts.

The respective A-phase magnetic pole part 33 and B-phase magnetic pole part 34 are disposed in such a way that they are spaced apart from each other by a 45-degree angle and by spacing in the circumferential direction Q of the rotor 20 about the center of axis 21 a of the shaft 21.

In this second embodiment, as shown in Fig. 8, the A-phase magnetic pole parts 33 and the B-phase magnetic pole parts 34 are disposed to be included within the minimum rectangular area R surrounding the rotor 20 when a stator 30 is viewed from the width direction X.

According to the present embodiment discussed above, in contrast with the case where, for example, the A-phase magnetic pole parts 33 and the B-phase magnetic pole parts 34 are provided spaced apart from and opposing the outer circumferential surface of the rotor 20, and arranged equiangularly over the enter circumference in the circumferential direction Q, any portion of the A-phase magnetic pole parts 33 and the B-phase magnetic pole parts 34 which is located at a position outside of the minimum rectangular area R in the radial direction of the rotor 20 when viewed from the width direction X, are omitted. Accordingly, when viewed from the width direction X, the shape of the stator 30 may be reduced in the radial direction of the rotor 20 (i.e., the height direction Z) while maintaining the rotor diameter.

In the present embodiment, the stator 30 comprises two stator core body parts 32, 32 positioned to oppose with each other in the width direction X with the rotor 20 interposing in between, wherein the A-phase magnetic pole part 33 and the B-phase magnetic pole part 34 are provided on each of the opposing surfaces 32c of the two stator core body parts 32, 32. In this manner, torque may be applied to the rotor 20 from both sides of the width direction X.

Thus, the size of the stepper motor 2 of the present embodiment may be reduced while maintaining the rotor diameter. Accordingly, an increase of the manufacturing cost may be suppressed while preventing a significant reduction of the torque performance.

In the embodiment described above, the stator 30 was configured to comprise the two stator cores 31, 31 oppositely disposed in the width direction X, but the present invention is not limited to this configuration. For example, as shown in Fig. 9, a stepper motor 3 may be configured to employ a stator 30A comprising only one stator core 31. Such a configuration may be made smaller and lighter compared to the configuration comprising two stator cores 31, 31.

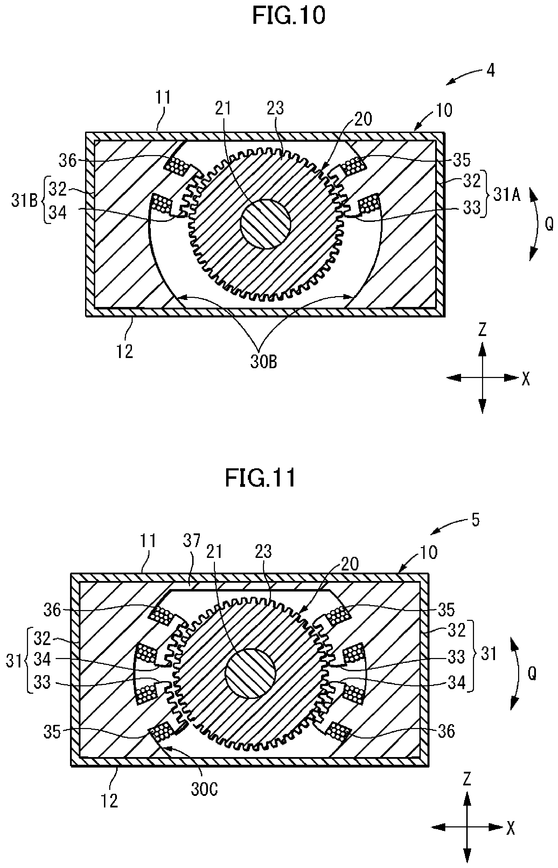

Also, as shown in Fig. 10 for example, a stepper motor 4 may be configured to employ a stator 30B with one stator core 31A only comprising one A-phase magnetic pole part 33 and the other stator core 31B only comprising one B-phase magnetic pole part 34. Such a configuration may be made lighter compared to the configuration in which one stator core 31 comprises a plurality of stator cores.

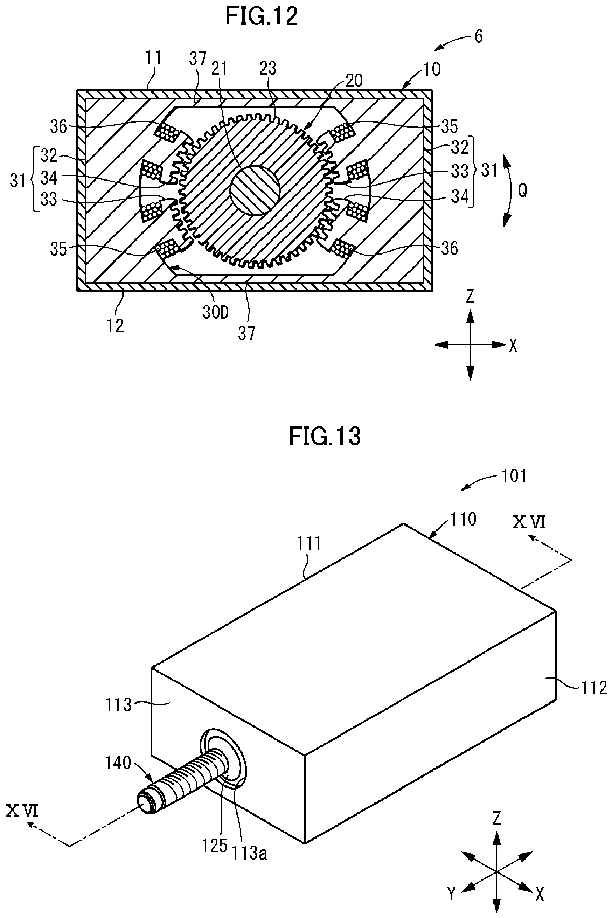

In the embodiment described above, each of the two stator cores 31, 31 is independently configured, but the present invention is not limited to this configuration. For example, as shown in Fig. 11, a stepper motor 5 may be configured to employ a stator 30C further comprising one stator core connector 37 for connecting the respective stator core body parts 32, 32. Alternatively, as shown in Fig. 12, a stepper motor 6 may be configured to employ a stator 30D further comprising only two stator core connectors 37, 37.

Each of the stator core connectors 37 has a flat plate-like form, and is disposed to be spaced apart from and opposing the outer circumferential surface of the rotor 20 in the height direction Z (i.e., the direction perpendicular to the width direction X). The stator core connectors 37 are integrally formed with the two stator core body parts 32, 32 to connect ends of the two stator core body parts 32, 32 at the same height in the height direction Z.

Such a configuration has a fixed positional relationship between the two stator cores 31, 31 (i.e., two stator core body parts 32, 32), and therefore, may be assembled accurately. Moreover, comprising the two stator core connectors 37 may improve assembly precision, whereas comprising the one stator core connector 37 may allow both assembly precision and weight reduction. Also, the stator core connector 37 formed in a flat plate-like form enables weight reduction compared to, for example, a configuration in which the surface of the stator core connector 37 opposing the rotor 20 is formed to be concave with an arc-like cross section consistent with the outer circumferential surface of the rotor 20.

### (Third Embodiment)

A linear actuator according to a third embodiment of the present invention will now be described with reference to Fig. 13-Fig. 16. As shown in Fig. 13-Fig. 16, the linear actuator (hereafter, simply referred to as an "actuator 101") comprises a case 110, a rotor 120, a nut member 125, a stator 130 and a screw shaft 140.

In terms of basic configuration, the rotor 120 in the present embodiment is identical to the rotor 20 used in the stepper motor 1 of the first embodiment, but the rotor 120 comprises a rotor shaft 121 described below in place of the shaft 21. Elements of the identical configuration of the present embodiment may be indicated with numerals and symbols of the first embodiment with additional 100, and detail descriptions for the identical elements may be omitted.

Since the stator 130 in the present embodiment has a similar configuration to that of the stator 30 used in the stepper motor 1 of the first embodiment, elements of the identical configuration of the present embodiment may be indicated with numerals and symbols of the first embodiment with additional 100, and detail descriptions for the identical elements may be omitted.

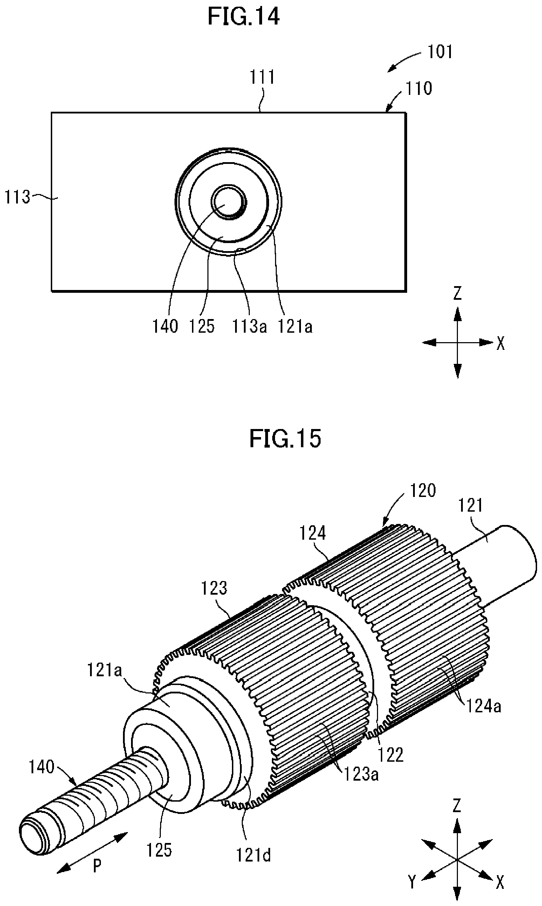

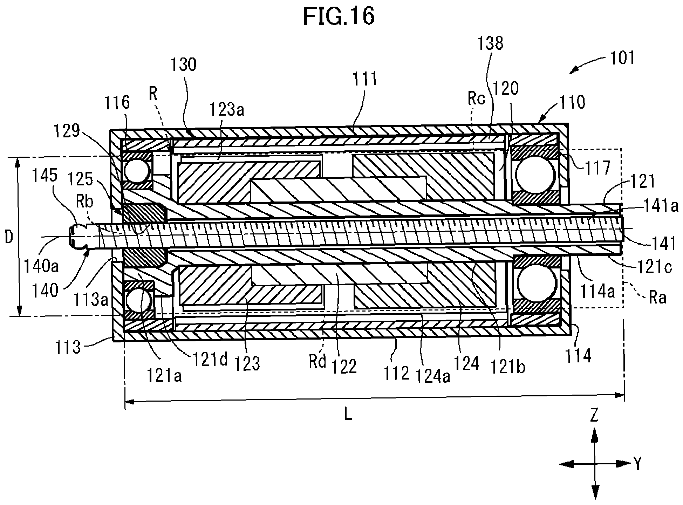

As shown in Fig. 14 and Fig. 16, the case 110 of the actuator 101 is formed in a cuboidal hollow box shape, wherein its dimension in the height direction Z is smaller than its dimension in the width direction X. As shown in Fig. 16, the case 110 comprises a case body part 111 made of metal such as stainless steel; and a front bearing 116 and a rear bearing 117, each consisting of a ball bearing. For this case 110 again, elements of a similar configuration to that of the case 10 used in the stepper motor 1 of the first embodiment may be indicated with numerals and symbols of the first embodiment with additional 100, and detail descriptions may be omitted.

As shown in Fig. 13 and Fig. 14, the case body part 111 comprises a peripheral wall part 112 in a hollow cuboidal shape with a rectangular cross section, a rectangular plate-like front wall part 113 for closing up a front-side end of the peripheral wall part 112 and a rectangular plate-like rear wall part 114 for closing up a rear-side end of the peripheral wall part 112.

There is a circular front shaft through hole 113a formed in the central section of the front wall part 113. The front bearing 116 is fixedly attached on an inner surface of the front wall part 113 so that the front bearing 16 is coaxial with the front shaft through hole 113a. Similarly, there is a circular rear shaft through hole 114a formed in the central section of the rear wall part 114. The rear bearing 117 is fixedly attached on an inner surface of the rear wall part 114 so that the rear bearing 17 is coaxial with the rear shaft through hole 114a.

As shown in Fig. 16, the rotor 120 comprises the rotor shaft 121, a magnet 122, an N-pole rotor core 123 and an S-pole rotor core 124. The rotor 120 collectively refers to all integrated components rotatably and axially supported, wherein the rotor 120 is rotated about the center of axis by the magnetic effect of the stator 130 discussed below.

The rotor shaft 121 is formed in a generally cylindrical shape with a material such as metal or hard resin and, as shown in Fig. 16, comprises a large-diameter part 121a, a shaft body part 121b and a small-diameter part 121c, all of which are configured coaxially and in the longitudinal direction Y (i.e., the axial direction P of the rotor 120) in the order from front to rear.

The large-diameter part 121a is formed so that its outer diameter is the same as the inner diameter of the front bearing 116, and integrally provided with a flange 121d, which projects outward from the rearward end of the outer circumferential surface of the large-diameter part 121a over its entire outer circumference. Provided within the large-diameter part 121a is the nut member 125 described below.

The shaft body part 121b is formed in a small cylindrical shape with its outer diameter smaller than the outer diameter of the large-diameter part 121a, and the front end of the shaft body part 121 b is coaxially connected with the large-diameter part 121a. The small-diameter part 121c is formed in a cylindrical shape, wherein its outer diameter is smaller than the outer diameter of the shaft body part 121b and the same as the inner diameter of the rear bearing 117, and wherein the small-diameter part 121c is coaxially connected with the rear end of the shaft body part 121b. The inner diameter of the shaft body part 121b and the inner diameter of the small-diameter part 121c are identical, and slightly greater than the outer diameter of the screw shaft 140 described below. The rotor shaft 121 is rotatably and axially supported, wherein the large-diameter part 121a is inserted through the front bearing 116 of the case 110, and the small-diameter part 121c is inserted through the rear bearing 117.

The magnet 122, the N-pole rotor core 123 and the S-pole rotor core 124 have similar configurations to ones of the stepper motor 1 of the above first embodiment, respectively. A diameter of the N-pole rotor core 123 and the S-pole rotor core 124 in this rotor 120 is the diameter D of the rotor 120.

The nut member 125 is formed in a cylindrical shape with a resin material such as polytetrafluoroethylene (PTFE) resin. The nut member 125 is housed inside the large-diameter part 121a of the rotor shaft 121, and fixed so that the center of axis of the nut member 125 matches the center of axis of the rotor 120.

As shown in Fig. 16, a through hole is provided within the nut member 125 in the direction of the center of axis, and an internal thread part 129 is formed in the inner circumferential surface of the nut member 125, wherein the screw shaft 140 is screwed together with the internal thread part 129. This nut member 125 is fixed to the rotor shaft 121, and therefore, rotated together with the rotor shaft 121.

Similarly to the first embodiment, the stator 130 is provided with dummy magnetic pole parts 138. In the Fig. 16, a pair of dummy magnetic pole parts 138 are disposed above and under the rotor 120. Thus, A-phase magnetic pole parts 133 and B-phase magnetic pole parts 134 (not shown) are disposed to be included within a minimum rectangular area R surrounding the rotor 120 when a stator 130 is viewed from the width direction X.

The screw shaft 140 is made of a metallic material, such as stainless steel, and formed in a bar shape with a circular cross section. As shown in Fig. 16, the screw shaft 140 integrally comprises a shaft body 141 and a head part 145 provided at the front end of the shaft body 141.

Formed in the entire outer circumferential surface of the shaft body 141 are a external thread part 141a, which is screwed together with the internal thread part 129 provided in the nut member 125. The screw shaft 140 is screwed together with the screw shaft 125 to thereby allow the centers of axis of the nut member 125 and the screw shaft 140 match.

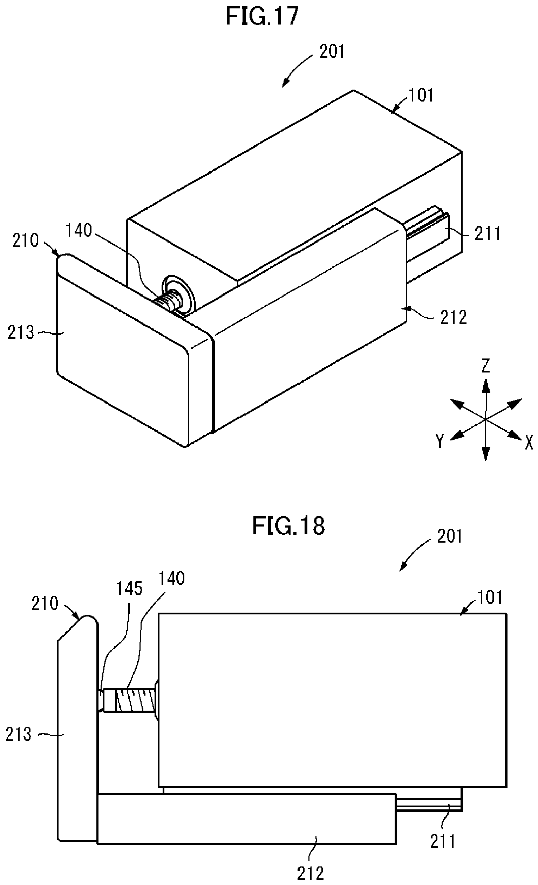

The head part 145 is formed in a spherical shape and housed in a spherical-head-part housing space provided in a connected object to thereby couple with the connected object (see Fig. 18 of an embodiment discussed below). The screw shaft 140 is retained so that it does not rotate relative to the connected object. Accordingly, if the nut member 125 is rotated by the rotor 120, the screw shaft 140 is moved forward or backward by the screw mechanism of the internal thread part 129 and the external thread part 141a.

According to the present embodiment discussed above, the magnetic pole parts, which the stator 130 comprises, are disposed so that the magnetic pole parts are included within the minimum rectangular area R surrounding the rotor 120 when the stator 130 is viewed from the width direction X. Also, the dummy magnetic pole parts 138 without winding core parts are disposed in the height direction (the Z direction) off the rotor 120. Accordingly, the size of the actuator 101 may be reduced in the radial direction of the rotor 120 (the Z direction) in terms of the shape of the stator 130 when viewed from the width direction X while maintaining the rotor diameter. Accordingly, an increase of the manufacturing cost may be suppressed while preventing a significant reduction of the torque performance.

Next, a variation of the linear actuator will be discussed with respect to Fig. 17-Fig. 19. A linear actuator 201 with a linear guide comprises a linear guide 210 in addition to the actuator 101 discussed above.

The linear guide 210 comprises a guide rail 211, a slider 212 and a connected object 213. The guide rail 211 is formed in a rail-like shape extending in the longitudinal direction Y, and attached to the case body part 111 of the linear actuator 101. In other words, the position of the guide rail 211 is positionally fixed relative to the stator 130.

The slider 212 comprises an outer portion 212a formed in a gutter-like shape and an inner portion 212b disposed inside of the outer portion 212a and slidably attached to the guide rail 211. The outer portion 212a and the inner portion 212b are coupled with bolts (not shown).

The slider 212 is slidably supported by the guide rail 211 so that the slider 212 is allowed to move only in the longitudinal direction Y (i.e., the forward/backward direction). The connected object 213 is formed in a rectangular plate-like shape, wherein the connected object 213 is connected to the head part 145 of the screw shaft 140 at the rear surface center of the connected object 213, and wherein the connected object 213 is coupled to the outer portion 212a of the slider 212 at the rear surface end of the connected object 213 with bolts (not shown).

In the linear actuator 201 with the linear guide, when the rotor 120 is rotated by the magnetic effect of the stator 130, the screw shaft 140 moves forward or backward in the longitudinal direction Y by way of the screw mechanism with the nut member 125, and therefore, the connected object 213 connected to the screw shaft 140 also moves forward or backward. At this point, the slider 212 coupled to the connected object 213 also moves forward or backward in the longitudinal direction Y, while being guided by the guide rail 211.

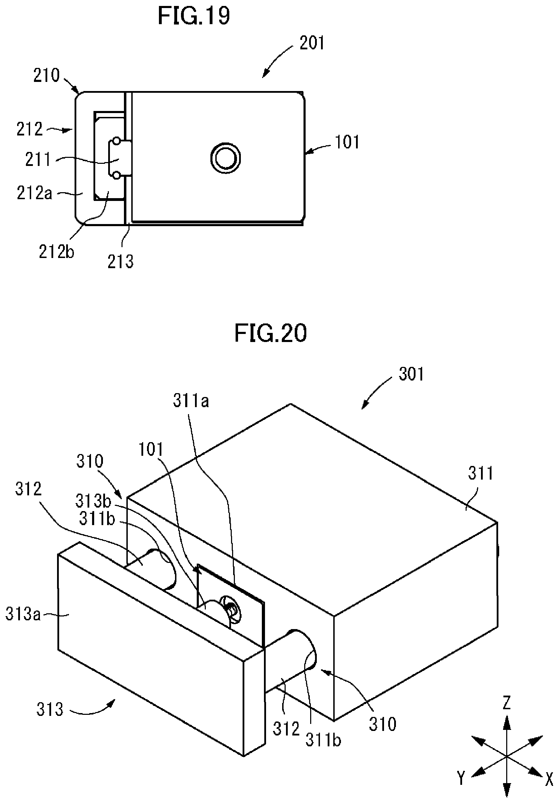

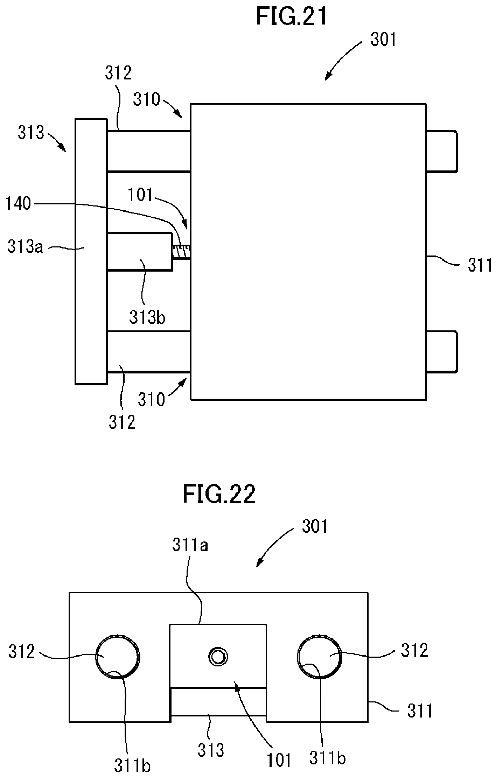

Next, another variation of the linear actuator will be discussed with respect to Fig. 20-Fig. 22. A linear actuator 301 with a linear bushing comprises a linear bushing 310 in addition to the linear actuator 101 discussed above.

The linear bushing 310 is composed of a guide case 311 and two sliders 312, 312, wherein the two sliders 312, 312 are connected with a connected object 313. The guide case 311 is formed in a cuboidal shape and an opening 311a is formed therein to fit in the linear actuator 101 in the longitudinal direction Y. Formed in the guide case 311 on both sides of the opening 311a are two guide through holes 311b, 311b extending in the longitudinal direction Y. The guide case 311 contains the linear actuator 101, which extends out of the aperture 311a.

The two sliders 312, 312 are cylindrically formed and inserted through the two guide through holes 311b, 311b of the guide case 311, respectively. The two sliders 312, 312 are slidably supported by the guide case 311 so that the sliders 312, 312 are allowed to move only in the longitudinal direction Y (i.e., the forward/backward direction). The connected object 313 integrally comprises a connected object body part 313a formed in a rectangular plate-like shape, and a cylindrical boss 313b standingly provided at the rear surface center of the connected object body part 313a. The head part 145 of the screw shaft 140 is connected to one end of the boss 313b, and one end of each of the two sliders 312, 312 is coupled to one of the two ends of the rear surface of the connected object body part 313a, respectively.

In the linear actuator 301 with the linear bushing, when the rotor 120 is rotated by the magnetic effect of the stator 130, the screw shaft 140 moves forward or backward in the longitudinal direction Y by way of the screw mechanism with the nut member 125, and therefore, the connected object 313 connected to the screw shaft 140 also moves forward or backward. At this point, the two sliders 312 coupled to the connected object 313 also moves forward or backward in the longitudinal direction Y, while being guided by the guide case 311.

Thus, the linear actuator 201 with a linear guide and the linear actuator 301 with a linear bushing may assist the movement of the screw shaft 140 and the respective connected object 213, 313 so that they do not deviate from forward/backward direction when the screw shaft 140 moves forward or backward.

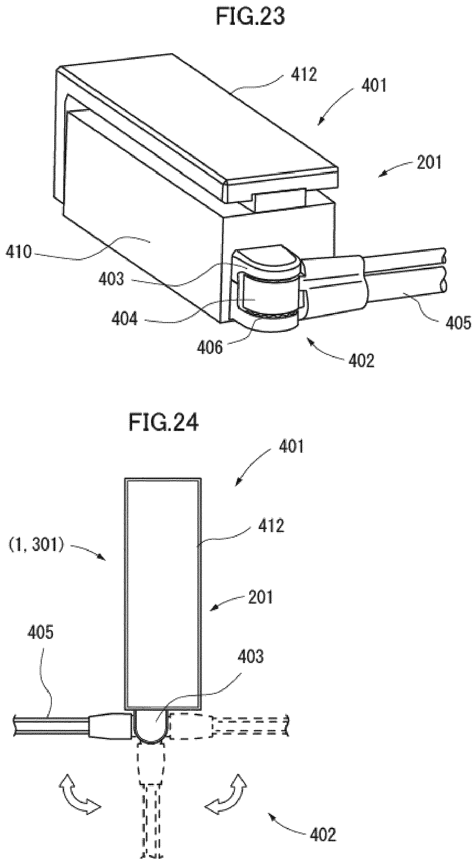

Next, another variation of the linear actuator will be discussed with respect to Fig. 23 and Fig. 24. A linear actuator 401 with a linear guide comprises a lead-out part 402 for leading out a connection cable 405 in addition to the linear actuator 201 with a linear guide discussed above. In the Fig. 23 and Fig. 24, the numeral 412 indicates a slider.

As shown in Fig. 23 and Fig. 24, the lead-out part 402 is provided on the rear end of a case 410, and provided with an angle change structure capable of maintaining an angle of the connection cable 405. Specifically, this angle change structure is constituted with a rotation supporting part 403 fixed to the case 410, a rotation axis part 404 supported by the rotation supporting part 403 and capable of rotating horizontally within about 180 degrees and an indented part 406 discussed below.

The rotation axis part 404 and the rotation supporting part 403 are both hollow structures and capable of leading the connection cable 405 therethrough. This connection cable 405 is connected to a circuit board or the like (not shown) on one end and connected to an external power source or other equipment (not shown) on the other end.

As shown in Fig. 23, the lead-out part 402 is provided with the indented part 406 comprising a plurality of indentations between the rotation supporting part 403 and the rotation axis part 404. The lead-out part 402 may change an angle of the connection cable 405 relative to the case 410 with an increment equal to a pitch of the indentations of the indented part 406. Also, this indented part 406 enables maintaining the angle of the connection cable 405 at any location where the indentations are intermeshed between the rotation supporting part 403 and the rotation axis part 404.

Since the lead-out part 402 comprises the above structure, as shown in Fig. 24, the cable angle may be freely changed from the position where the connection cable 405 is on the left side in the diagram (indicated with solid lines) to a position where the connection cable 405 is oriented in the same direction as the longitudinal direction of the case 410, and further, from the position indicated with the solid lines to a position after being rotated by 180 degrees (indicated with broken lines).

In this manner, the lead-out part 402 of the present embodiment may maintain the connection cable 405 at any angle with the indented part 406, but the angle change structure is not limited to the above indentations and other structures may be selected. For example, a predetermined frictional force may be generated between the rotation supporting part 403 and the rotation axis part 404, or one of the rotation supporting part 403 and the rotation axis part 404 may be provided with elastic protrusions and the other may be provided with indentations to thereby cause them to meshingly engage with each other.

Also, the lead-out part 402 may be applied to not only the linear actuator 401, but also the stepper motors shown in Fig. 1-Fig. 12 and the linear actuators with the linear bushing shown in Fig. 20-Fig. 22 (indicated with the reference numerals 1 and 301 in parentheses in Fig. 24). Also as shown in Fig. 23 and Fig. 24, the lead-out part 402 may be disposed at not only on the rear end of the case 410, but also any position such as on the side of the case 410 as long as the lead-out part 402 does not interfere with other members such as the slider 412. Moreover, the lead-out part 402 may rotate vertically or at any other angles instead of horizontally as in the above embodiment.

Note that the stepper motor configurations of Fig. 8-Fig. 12 shown as variations of the first embodiment may be employed in the linear actuator 101, the linear actuators 201, 401 with the linear guide and the linear actuator 301 with the linear bushing according to the embodiments discussed above.

While embodiments of the present invention have been described above, the present invention is not limited to these examples. Embodiments created by those skilled in the art by performing component addition, deletion and/or design change to respective embodiments discussed above as well as embodiments provided with an appropriate combination of characteristics of the embodiments of the present invention are construed to fall within the scope of the present invention as long as they are provided with the spirit and scope of the present invention.

## Claims

1. A stator core within which a rotor is disposed, comprising:
a body part comprising a short side and a long side when viewed from an axial direction of the rotor,
wherein the body part comprises:
a magnetic pole part comprising a winding core part with a winding around it, protruding from the short side toward the rotor, and a plurality of magnetic pole denticulations continuous with the winding core part and protruding toward the rotor; and
a dummy magnetic pole part comprising a plurality of dummy denticulations protruding from the long side toward the rotor.

2. The stator core of Claim 1, wherein
the dummy magnetic pole part is formed so that spacing of the plurality of dummy denticulations is identical with spacing of the plurality of magnetic pole denticulations.

3. The stator core of Claim 1, wherein
the dummy magnetic pole part is formed so that the spacing of the plurality of dummy denticulations is different from the spacing of the plurality of magnetic pole denticulations.

4. The stator core of any one of Claims 1-3, wherein
the body part comprises a plurality of the magnetic pole parts spaced apart with predetermined magnetic pole spacing in a circumferential direction of the rotor when the body part is viewed from the axial direction of the rotor, and
dummy spacing identical with the magnetic pole spacing is formed in the dummy magnetic pole part.

5. The stator core of any one of Claims 1-3, wherein
a winding recess is formed in the body part for a winding around the winding core part, and
an adjusting recess extending toward the dummy magnetic pole part is provided in the winding recess adjacent to the dummy magnetic pole part.

6. The stator core of Claim 4, wherein
a winding recess is formed in the body part for a winding around the winding core part, and
an adjusting recess extending toward the dummy magnetic pole part is provided in the winding recess adjacent to the dummy magnetic pole part.

7. A stepper motor having a stator core within which a rotor is disposed, wherein
the stator core comprises a body part comprising a short side and a long side when viewed from an axial direction of the rotor,
wherein the body part comprises a plurality of magnetic pole parts, each comprising a winding core part with a winding around it, protruding from the short side toward the rotor, and a plurality of magnetic pole denticulations continuous with the winding core part and protruding toward the rotor, and
wherein the plurality of magnetic pole parts are disposed to be included within a minimum rectangular area surrounding the rotor when the stator core is viewed from one direction perpendicular to the axial direction of the rotor.

8. The stepper motor of Claim 7, further comprising:
a dummy magnetic pole part comprising a plurality of dummy denticulations protruding from the long side of the body part of the stator core toward the rotor.

9. The stepper motor of Claim 8, wherein
the dummy magnetic pole part is formed so that spacing of the plurality of dummy denticulations is identical with spacing of the plurality of magnetic pole denticulations.

10. The stepper motor of Claim 8, wherein
the dummy magnetic pole part is formed so that the spacing of the plurality of dummy denticulations is different from the spacing of the plurality of magnetic pole denticulations.

11. The stepper motor of Claim 8, wherein
a winding recess is formed in the body part of the stator core for a winding around the winding core part, and
an adjusting recess extending toward the dummy magnetic pole part is provided in the winding recess adjacent to the dummy magnetic pole part.

12. The stepper motor of Claim 7, wherein
the stator core is separated into two stator cores so that the two stator cores oppose with each other in the one direction with the rotor in between,
the plurality of magnetic pole parts are provided on each of the opposing surfaces of the two stator cores, and
the stepper motor further comprising one or two stator core connectors for connecting the two stator core.

13. The stepper motor of any one of Claims 7-10, further comprising:
a case for housing the stator core and the rotor; and a connection cable for being lead out of the case through a lead-out part,
wherein the lead-out part comprises an angle change structure for maintaining a lead-out angle of the connection cable with the lead-out angle arbitrarily changed relative to the case.

14. The stepper motor of Claim 11, further comprising:
a case for housing the stator core and the rotor; and a connection cable for being lead out of the case through a lead-out part,
wherein the lead-out part comprises an angle change structure for maintaining a lead-out angle of the connection cable with the lead-out angle arbitrarily changed relative to the case.

15. The stepper motor of Claim 12, further comprising:
a case for housing the stator core and the rotor; and a connection cable for being lead out of the case through a lead-out part,
wherein the lead-out part comprises an angle change structure for maintaining a lead-out angle of the connection cable with the lead-out angle arbitrarily changed relative to the case.

16. A linear actuator comprising:
a stepper motor comprising a stator core with a rotor disposed therein;
a nut member disposed coaxially with the center of axis of the rotor, the nut member for being rotated by the rotation of the rotor; and
a screw shaft screwed together with the nut member for being moved forward or backward by the rotation of the nut member,
wherein the stator core comprises a body part comprising a short side and a long side when viewed from an axial direction of the rotor; and
a plurality of magnetic pole parts, each comprising a winding core part with a winding around it, protruding from the short side toward the rotor, and a plurality of magnetic pole denticulations continuous with the winding core part and protruding toward the rotor, and
wherein the plurality of magnetic pole parts are disposed to be included within a minimum rectangular area surrounding the rotor when the stator core is viewed from one direction perpendicular to the axial direction of the rotor.

17. The linear actuator of Claim 16, further comprising:
a case for housing the stator core and the rotor; and a connection cable for being lead out of the case through a lead-out part,
wherein the lead-out part comprises an angle change structure for maintaining a lead-out angle of the connection cable with the lead-out angle arbitrarily changed relative to the case.

18. A linear actuator with a guide comprising the linear actuator of Claim 16 or 17, further comprising:
a slider;
a guide positionally fixed relative to the stator for slidably supporting the slider so that the slider is allowed to move only in a forward/backward direction of the screw shaft; and
a connected object connected with a front end of the screw shaft and also connected with the slider.
